# EUROPEAN PATENT SPECIFICATION

(11) **EP 3 147 977 B1**
(45) Date of publication and mention of the grant of the patent: **14.01.2026**
(21) Application number: 16176136.6
(22) Date of filing: 24.06.2016
(51) Int. Cl.: H01M 4/88, B05C 1/08

(54) **APPARATUS FOR AND METHOD OF MANUFACTURING CATALYST-COATED MEMBRANE**
VORRICHTUNG UND VERFAHREN ZUR HERSTELLUNG EINER KATALYSATORBESCHICHTETEN MEMBRAN
APPAREIL ET PROCÉDÉ DE FABRICATION DE MEMBRANES REVÊTUES DE CATALYSEUR

(30) Priority: 28.09.2015 JP 2015189124
(43) Date of publication of application: 29.03.2017
(73) Proprietor: SCREEN Holdings Co., Ltd., Kyoto-shi, Kyoto 602-8585 (JP)
(72) Inventor: Takagi, Yoshinori, Kyoto-shi, Kyoto 602-8585 (JP)
(74) Representative: Kilian Kilian & Partner mbB

(56) References cited:
- EP-A1- 2 813 363
- EP-A1- 2 903 065
- US-B1- 6 692 542

## Description

### BACKGROUND OF THE INVENTION

### Field of the Invention

The present invention relates to an apparatus for and a method of manufacturing a catalyst-coated membrane which separate an electrolyte membrane from an elongated strip comprised of at least two layers of a base material and the electrolyte membrane to form a catalyst layer on a surface of the separated electrolyte membrane.

### Description of the Background Art

In recent years, attention has been given to fuel cells as power sources for driving motor vehicles, mobile phones and the like. A fuel cell is a power generation system that generates electric power through an electrochemical reaction between hydrogen (H₂) contained in a fuel and oxygen (O₂) in the air. The fuel cell has advantages over other cells in its high power generation efficiency and low environmental load.

There are several types of fuel cells that are different depending on electrolytes being used therein. One of these fuel cells is a polymer electrolyte fuel cell (PEFC) including an ion exchange membrane (electrolyte membrane) used as the electrolyte. Polymer electrolyte fuel cells, which are capable of operating at room temperature and can be reduced in size and weight, are expected to be applied to motor vehicles and portable devices.

In general, the polymer electrolyte fuel cells have a structure such that a plurality of cells are stacked one on top of another. One cell is comprised of a membrane electrode assembly (MEA), and a pair of separators on opposite surfaces of the membrane electrode assembly. The membrane electrode assembly includes a catalyst-coated membrane (CCM), and a pair of gas diffusion layers placed on opposite sides of the catalyst-coated membrane. The catalyst-coated membrane includes an electrolyte thin film (polymer electrolyte membrane), and a pair of catalyst layers formed on opposite surfaces of the electrolyte thin film. The catalyst layers and the gas diffusion layers on opposite sides of the polymer electrolyte membrane constitute a pair of electrode layers. One of the two electrode layers is an anode electrode, and the other thereof is a cathode electrode. When a fuel gas containing hydrogen comes in contact with the anode electrode and air comes in contact with the cathode electrode, electric power is produced by an electrochemical reaction.

The aforementioned catalyst-coated membrane is typically produced by applying a catalyst ink (electrode paste) to a surface of an electrolyte membrane and then drying the catalyst ink. The catalyst ink is obtained by dispersing catalyst particles containing platinum (Pt) in a solvent such as alcohol. A conventional technique of manufacturing such a catalyst-coated membrane is disclosed, for example, in Japanese Patent Application Laid-Open No. 2013-182682.

The electrolyte membrane for use in the polymer electrolyte fuel cell has the property of being easily deformable depending on the humidity of the atmosphere. For this reason, the electrolyte membrane affixed to a base material in sheet form is supplied during the manufacture of the catalyst-coated membrane. In an apparatus for manufacturing the catalyst-coated membrane, the electrolyte membrane is initially held on a suction roller under suction, and the base material is separated from the electrolyte membrane. Thereafter, the catalyst ink is applied to a surface of the electrolyte membrane held on the suction roller under suction.

Unfortunately, when the force of suction of the electrolyte membrane onto the suction roller is poor, there is a problem such that the electrolyte membrane is attracted toward the base material to lift from the suction roller during the separation of the base material. In particular, near the opposite edges of the electrolyte membrane, the force of suction is prone to be insufficient because pressure in a sucking port provided in the surface of the suction roller is less prone to decrease. If the electrolyte membrane lifts from the suction roller, the electrolyte membrane is held on the suction roller under suction while having wrinkles therein. Then, the catalyst ink is applied to the surface of the electrolyte membrane having wrinkles therein.

In Japanese Patent Application Laid-Open No. 2013-182682, it is disclosed that a jet of air is directed onto a separation start portion of two sheets where the separation of the two sheets starts to suppress slack in the membrane in the separation start portion (with reference to paragraphs 0027 to 0031). However, the suppression of the lift of the membrane near the opposite edges of the membrane where the force of suction is poor is not particularly disclosed in Japanese Patent Application Laid-Open No. 2013-182682. Also, in the case where a catalyst supply part for the application of the catalyst ink is disposed near such a separation start portion, consideration must be given to reducing the influence of the jet of air upon the catalyst supply part.

EP 2 813 363 A1 shows an apparatus according to the preamble of claim 1.

### SUMMARY OF THE INVENTION

In view of the foregoing, it is therefore an object of the present invention to provide an apparatus for and a method of manufacturing a catalyst-coated membrane which are capable of suppressing the lift of an electrolyte membrane from a suction roller during the separation of a base material and which have less influence upon a catalyst supply part.

This object is achieved by an apparatus according to claim 1 and a method according to claim 9.

A first aspect of the present invention is intended for an apparatus for manufacturing a catalyst-coated membrane, as defined in claim 1.

A second aspect of the present invention is intended for a method of manufacturing a catalyst-coated membrane, as defined in claim 9.

According to the first and second aspects of the present invention, the lift of the electrolyte membrane from the suction roller is suppressed by blowing the gas. In particular, the electrolyte membrane is pressed against the suction roller on opposite edges of the electrolyte membrane as seen in the width direction of the electrolyte membrane where the force of suction is poor. The ejected gas passes through spaces defined between the ejection regions. This reduces the amount of gas flowing toward the catalyst supply part.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram showing the configuration of a manufacturing apparatus for a catalyst-coated membrane;
Fig. 2 is an enlarged view of a separation roller and its surroundings;
Fig. 3 is a schematic view showing the shape of a drying furnace taken along a section including the axis of a suction roller;
Fig. 4 is an enlarged view of a laminating roller and its surroundings;
Fig. 5 is a block diagram showing connections between a controller and components of the manufacturing apparatus;
Fig. 6 is a perspective view of the separation roller, a gas supply part and the suction roller;
Fig. 7 is a flow diagram showing a procedure between the introduction of an elongated strip and the supply of a catalyst ink;
Fig. 8 is a view showing a widthwise positional relationship between an electrolyte membrane held on the suction roller and a plurality of pipe nozzles; and
Figs. 9 and 10 are side views showing the configurations of the suction roller, the separation roller and a rotation speed controller.

### DESCRIPTION OF THE PREFERRED EMBODIMENTS

A preferred embodiment according to the present invention will now be described with reference to the drawings.

### <1. Configuration of Manufacturing Apparatus>

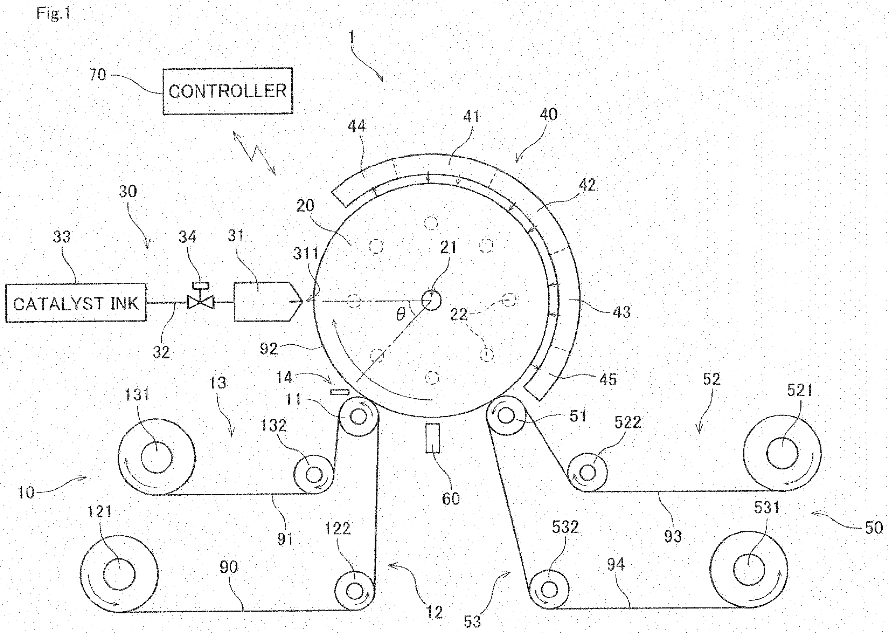

Fig. 1 is a diagram showing the configuration of a manufacturing apparatus 1 for a catalyst-coated membrane according to one preferred embodiment of the present invention. This manufacturing apparatus 1 is an apparatus that forms a catalyst layer serving as an electrode on a surface of an electrolyte membrane which is a strip-shaped thin film to manufacture a catalyst-coated membrane for a polymer electrolyte fuel cell. As shown in Fig. 1, the manufacturing apparatus 1 for a catalyst-coated membrane according to the present preferred embodiment includes an introduction and separation part 10, a suction roller 20, a catalyst supply part 30, a drying furnace 40, an affixing part 50, a surface cooling part 60, and a controller 70.

The introduction and separation part 10 introduces an elongated strip 90 comprised of two layers of a base material 91 and an electrolyte membrane 92 onto an outer peripheral surface of the suction roller 20, and separates the base material 91 from the electrolyte membrane 92.

For example, fluorine-based or hydrocarbon-based polymer electrolyte membranes are used as the electrolyte membrane 92. Specific examples of the electrolyte membrane 92 used herein include polymer electrolyte membranes containing perfluorocarbon sulfonic acid (e.g., Nafion^{®} available from DuPont, USA; Flemion^{®} available from Asahi Glass Co., Ltd.; Aciplex^{®} available from Asahi Kasei Corporation; and Goreselect^{®} available from W. L. Gore & Associates, Inc.). The electrolyte membrane 92 has a thickness in the range of 5 to 30 µm, for example. The electrolyte membrane 92 swells when exposed to moisture in the atmosphere, and shrinks when the humidity of the atmosphere is decreased. That is, the electrolyte membrane 92 has the property of being easily deformable depending on the humidity of the atmosphere.

The base material 91 is a back sheet for suppressing the deformation of the electrolyte membrane 92. Resins having a mechanical strength higher than that of the electrolyte membrane 92 and excellent in shape retaining function are used as the material of the base material 91. Specific examples of the base material 91 used herein include films made of PEN (polyethylene naphthalate) and PET (polyethylene terephthalate). The base material 91 has a thickness in the range of 25 to 100 µm, for example.

As shown in Fig. 1, the introduction and separation part 10 includes a separation roller 11, an introduction part 12. a discharge part 13, and a gas supply part 14.

The separation roller 11 rotates about a horizontally extending axis. The separation roller 11 has a cylindrical outer peripheral surface of an elastic body. The outer peripheral surface of the separation roller 11 and the outer peripheral surface of the suction roller 20 to be described later are opposed to each other, with a gap therebetween through which the elongated strip 90 passes. The separation roller 11 is pressurized toward the suction roller 20 by an air cylinder not shown.

The introduction part 12 includes a membrane unwinding roller 121 and a first detection roller 122. Both the membrane unwinding roller 121 and the first detection roller 122 are disposed parallel to the separation roller 11. Before being supplied, the elongated strip 90 is wound on the membrane unwinding roller 121. The membrane unwinding roller 121 is rotated by the power of a motor not shown. As the membrane unwinding roller 121 rotates, the elongated strip 90 is unwound from the membrane unwinding roller 121.

The elongated strip 90 unwound from the membrane unwinding roller 121 is turned around by contacting the outer peripheral surface of the first detection roller 122, and is transported toward the separation roller 11. The first detection roller 122 detects the tension applied to the elongated strip 90 in the introduction part 12 by measuring the load received from the elongated strip 90 by means of a load cell. The controller 70 to be described later controls the number of rotations of the membrane unwinding roller 121 so that the tension of the elongated strip 90 detected by the first detection roller 122 is equal to a previously set value.

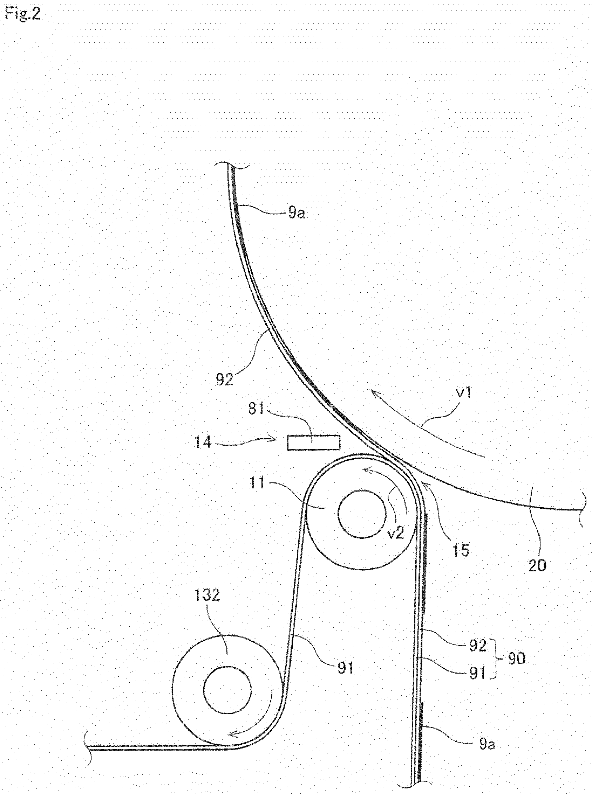

Fig. 2 is an enlarged view of the separation roller 11 and its surroundings. As shown in Fig. 2, the elongated strip 90 having passed over the first detection roller 122 is introduced into a gap 15 defined between the separation roller 11 and the suction roller 20. At this time, the base material 91 comes in contact with the outer peripheral surface of the separation roller 11, and the electrolyte membrane 92 comes in contact with the outer peripheral surface of the suction roller 20. The elongated strip 90 is pressed against the outer peripheral surface of the suction roller 20 by the pressure received from the separation roller 11. Then, the electrolyte membrane 92 is suctioned onto the outer peripheral surface of the suction roller 20 by the negative pressure (to be described later) of the suction roller 20.

In the present preferred embodiment, a layer of catalyst material 9a is previously formed on one of the surfaces of the electrolyte membrane 92 unwound from the membrane unwinding roller 121. Thus, the electrolyte membrane 92 together with the layer of catalyst material 9a is suctioned onto the outer peripheral surface of the suction roller 20. The layer of catalyst material 9a is formed in a coating apparatus different from the manufacturing apparatus 1 by intermittently applying a catalyst ink to a surface of the electrolyte membrane 92 while transporting the elongated strip 90 comprised of the two layers of the base material 91 and the electrolyte membrane 92 by a roll-to-roll process and then drying the applied catalyst ink.

The discharge part 13 includes a base material winding roller 131 and a second detection roller 132. Both the base material winding roller 131 and the second detection roller 132 are disposed parallel to the separation roller 11. The base material 91 having passed through the gap 15 is transported away from the suction roller 20 toward the second detection roller 132. Thus, the base material 91 is separated from the electrolyte membrane 92. The separated base material 91 is turned around by contacting the outer peripheral surface of the second detection roller 132, and is transported toward the base material winding roller 131.

The base material winding roller 131 is rotated by the power of a motor not shown. Thus, the base material 91 is wound on the base material winding roller 131. The second detection roller 132 detects the tension applied to the base material 91 in the discharge part 13 by measuring the load received from the base material 91 by means of a load cell. The controller 70 to be described later controls the number of rotations of the base material winding roller 131 so that the tension of the base material 91 detected by the second detection roller 132 is equal to a previously set value.

The gas supply part 14 blows a gas onto the outside surface of the electrolyte membrane 92 having passed through the gap 15 and held on the suction roller 20 under suction. This promotes the separation of the base material 91 from the electrolyte membrane 92 and suppresses the lift of the electrolyte membrane 92 from the suction roller 20. The details on the configuration of the gas supply part 14 will be described later.

The suction roller 20 is a roller that rotates while holding the electrolyte membrane 92 on the outer peripheral surface thereof under suction. The suction roller 20 has the cylindrical outer peripheral surface greater in diameter than the separation roller 11. The suction roller 20 has a diameter in the range of 400 to 1600 mm, for example. The suction roller 20 is rotated about an axis extending horizontally (i.e., parallel to the separation roller 11) by the power of a motor not shown. A first direction that is the direction of rotation of the suction roller 20 is opposite from a second direction that is the direction of rotation of the separation roller 11.

Examples of the material of the suction roller 20 used herein include porous materials such as porous carbon and porous ceramics. Specific examples of the porous ceramics include sintered bodies of alumina (Al₂O₃) and silicon carbide (SiC). The porous suction roller 20 has pores with a diameter of not greater than 5 µm, for example, and a porosity in the range of 15% to 50%, for example. The outer peripheral surface of the suction roller 20 has a surface roughness of not greater than 5 µm in terms of Rz (maximum height), for example. Variations in the distance from the axis of rotation of the suction roller 20 to the outer peripheral surface thereof during rotation are not greater than 10 µm.

The suction roller 20 has an end surface provided with a sucking port 21. The sucking port 21 is connected to a sucking mechanism (e.g., an exhaust pump) not shown. When the sucking mechanism is brought into operation, a negative pressure (vacuum) is developed in the sucking port 21 of the suction roller 20. Then, a negative pressure (vacuum) is developed also at the outer peripheral surface of the suction roller 20 through the pores in the suction roller 20. For example, a negative pressure of not less than 10 kPa is developed at the outer peripheral surface of the suction roller 20 by developing a negative pressure of not less than 90 kPa in the sucking port 21. The electrolyte membrane 92 is transported in the form of an arc by the rotation of the suction roller 20 while being held on the outer peripheral surface of the suction roller 20 under suction by the negative pressure.

A plurality of water-cooled tubes 22 are provided inside the suction roller 20, as indicated by broken lines in Fig. 1. Cooling water temperature-controlled at a predetermined temperature is supplied from a water supply mechanism not shown to the water-cooled tubes 22. When the manufacturing apparatus 1 is in operation, the heat of the suction roller 20 is absorbed by the cooling water serving as a heat medium. Thus, the suction roller 20 is cooled. After absorbing the heat, the cooling water is discharged to a drainage mechanism not shown.

The catalyst supply part 30 is a mechanism for applying a catalyst ink onto a surface of the electrolyte membrane 92 transported by the suction roller 20. An electrode paste obtained by dispersing particles containing a catalyst material (e.g., platinum (Pt)) in a solvent such as alcohol is used for the catalyst ink. As shown in Fig. 1, the catalyst supply part 30 includes a coating nozzle 31. The coating nozzle 31 is provided downstream of the separation roller 11 as seen in a direction (transport direction) in which the electrolyte membrane 92 is transported by the suction roller 20. The coating nozzle 31 has an ejection orifice 311 opposed to the outer peripheral surface of the suction roller 20. The ejection orifice 311 is a slit-shaped opening extending horizontally along the outer peripheral surface of the suction roller 20.

A flow passage connection is established between the coating nozzle 31 and a catalyst ink supply source 33 through a supply pipe 32. An on-off valve 34 is interposed in the path of the supply pipe 32. Thus, when the on-off valve 34 is opened, the catalyst ink is supplied from the catalyst ink supply source 33 through the supply pipe 32 to the coating nozzle 31. Then, the catalyst ink is ejected from the ejection orifice 311 of the coating nozzle 31 toward the electrolyte membrane 92. As a result, the outside surface of the electrolyte membrane 92 held by the suction roller 20 is coated with the catalyst ink.

In the present preferred embodiment, the catalyst ink is intermittently ejected from the ejection orifice 311 of the coating nozzle 31 by opening and closing the on-off valve 34 at fixed intervals. This causes the catalyst ink to be intermittently applied to the surface of the electrolyte membrane 92 at fixed intervals in the transport direction. However, the catalyst ink may be continuously applied to the surface of the electrolyte membrane 92 in the transport direction by continuously opening the on-off valve 34.

A material that causes a fuel cell reaction to occur in the anode or cathode of a polymer fuel cell is used as the catalyst material in the catalyst ink. Specifically, platinum (Pt), a platinum alloy, a platinum compound and the like may be used as the catalyst material. Examples of the platinum alloy used herein include alloys of platinum and at least one metal selected from the group consisting of ruthenium (Ru), palladium (Pd), nickel (Ni), molybdenum (Mo), iridium (Ir), iron (Fe) and the like. In general, platinum is used as the catalyst material for the cathode, and any one of the platinum alloys is used as the catalyst material for the anode. The catalyst ink ejected from the coating nozzle 31 may be for the cathode or for the anode. The catalyst materials 9a and 9b formed on the front and back surfaces of the electrolyte membrane 92 are catalyst materials of polarities opposite from each other.

The drying furnace 40 is a section for drying the catalyst ink applied to the surface of the electrolyte membrane 92. The drying furnace 40 according to the present preferred embodiment is disposed downstream of the catalyst supply part 30 as seen in the direction (transport direction) in which the electrolyte membrane 92 is transported by the suction roller 20. The drying furnace 40 is provided in the form of an arc along the outer peripheral surface of the suction roller 20. As shown in Fig. 1, the drying furnace 40 includes three hot gas supply parts 41 to 43, and two heat insulation parts 44 and 45. The three hot gas supply parts 41 to 43 blow heated gases (hot gases) toward the outer peripheral surface of the suction roller 20. When the electrolyte membrane 92 coated with the catalyst ink passes along the hot gas supply parts 41 to 43, the catalyst ink is dried to solidify by the hot gases. That is, the solvent in the catalyst ink is evaporated, so that the layer of catalyst material 9b is formed on the surface of the electrolyte membrane 92.

The three hot gas supply parts 41 to 43 blow the hot gases at different temperatures. The temperatures of the hot gases blown from the three hot gas supply parts 41 to 43 are in ascending order from upstream to downstream as seen in the direction (transport direction) in which the electrolyte membrane 92 is transported by the suction roller 20. The temperature of the hot gas blown from the hot gas supply part 41 most upstream as seen in the transport direction is, for example, in the range from an ambient environmental temperature to 40°C. The temperature of the hot gas blown from the next hot gas supply part 42 is, for example, in the range from 40°C to 80°C. The temperature of the hot gas blown from the hot gas supply part 43 most downstream as seen in the transport direction is, for example, in the range from 50°C to 100°C.

In this manner, the temperatures of the hot gases blown onto the electrolyte membrane 92 in the drying furnace 40 according to the present preferred embodiment are in ascending order toward downstream as seen in the transport direction. This allows a less steep increase in the temperatures of the electrolyte membrane 92 and the catalyst ink to thereby suppress the occurrence of damages to the catalyst material 9b such as cracks in the catalyst material 9b due to abrupt drying.

The two heat insulation parts 44 and 45 are provided respectively upstream and downstream of the three hot gas supply parts 41 to 43 as seen in the direction (transport direction) in which the electrolyte membrane 92 is transported by the suction roller 20. Specifically, the heat insulation part 44 is disposed upstream of the hot gas supply part 41 most upstream as seen in the transport direction, and the heat insulation part 45 is disposed downstream of the hot gas supply part 43 most downstream as seen in the transport direction. These heat insulation parts 44 and 45 suck in the gas near the outer peripheral surface of the suction roller 20. This prevents the hot gases blown from the hot gas supply parts 41 to 43 from flowing upstream and downstream as seen in the transport direction beyond the heat insulation parts 44 and 45. The heat insulation parts 44 and 45 also prevent the vapor of the solvent generated from the catalyst ink during the drying from flowing upstream and downstream as seen in the transport direction beyond the heat insulation parts 44 and 45.

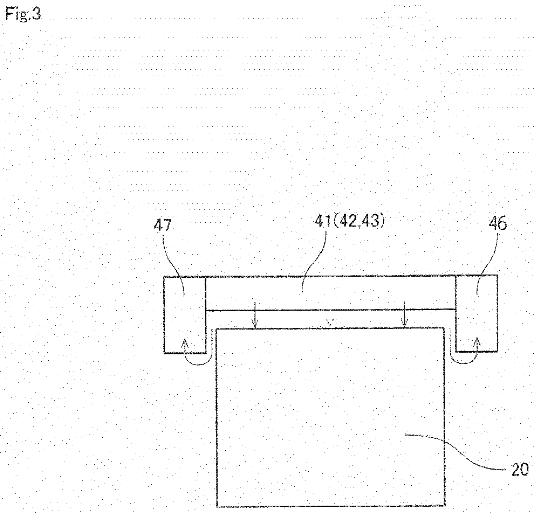

Fig. 3 is a schematic view showing the shape of the drying furnace 40 taken along a section including the axis of the suction roller 20. As shown in Fig. 3, the drying furnace 40 according to the present preferred embodiment includes a pair of sucking parts 46 and 47. The sucking parts 46 and 47 protrude in the form of plates from opposite side edges of the hot gas supply parts 41 to 43 toward the suction roller 20. The sucking parts 46 and 47 extend in the form of arcs along opposite side portions of the outer peripheral surface of the suction roller 20. These sucking parts 46 and 47 suck in surrounding gases. This prevents the hot gases supplied from the hot gas supply parts 41 to 43 and the vapor of the solvent from flowing outwardly beyond the sucking parts 46 and 47.

The affixing part 50 affixes a strip-shaped support film 93 to the surface of the electrolyte membrane 92 with the layer of catalyst material 9b formed thereon. The affixing part 50 is disposed downstream of the drying furnace 40 as seen in the direction (transport direction) in which the electrolyte membrane 92 is transported by the suction roller 20. As shown in Fig. 1, the affixing part 50 includes a laminating roller 51, a film supply part 52, and a catalyst-coated membrane collection part 53.

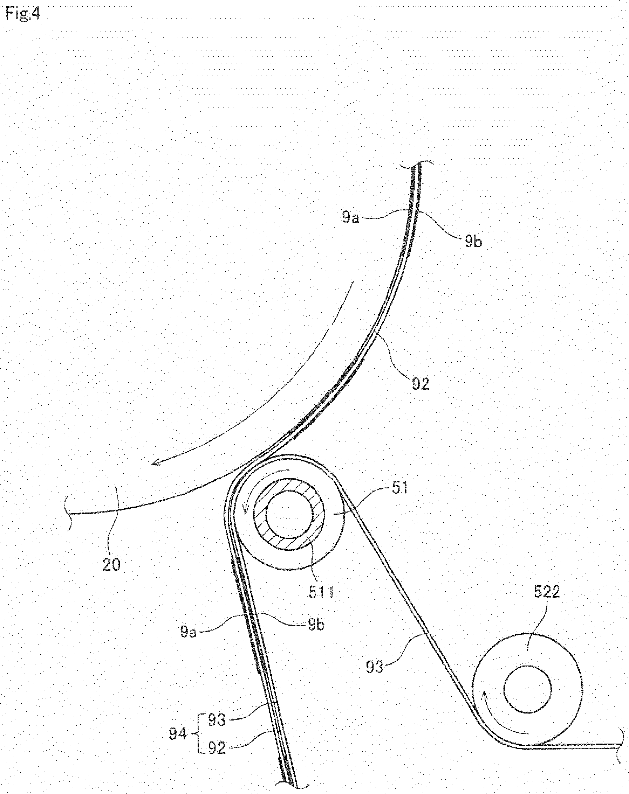

Fig. 4 is an enlarged view of the laminating roller 51 and its surroundings. The laminating roller 51 is a roller that rotates about a horizontally extending axis. The laminating roller 51 has a cylindrical outer peripheral surface smaller in diameter than the suction roller 20. The outer peripheral surface of the laminating roller 51 and the outer peripheral surface of the suction roller 20 are opposed to each other, with a gap therebetween through which the electrolyte membrane 92 and the support film 93 pass. The laminating roller 51 is pressurized toward the suction roller 20 by an air cylinder not shown.

A metal having a high thermal conductivity, for example, is used as the material of the laminating roller 51. A heater 511 that generates heat when energized is provided inside the laminating roller 51. A sheathed heater, for example, may be used as the heater 511. When the heater 511 is energized, the outer peripheral surface of the laminating roller 51 is temperature-controlled at a predetermined temperature higher than the environmental temperature by the heat generated from the heater 511. An output from the heater 511 may be controlled so that the temperature of the outer peripheral surface of the laminating roller 51 measured using a temperature sensor such as a radiation thermometer reaches a fixed temperature based on the result of measurement.

Referring again to Fig. 1, the film supply part 52 includes a film unwinding roller 521 and a third detection roller 522. Both the film unwinding roller 521 and the third detection roller 522 are disposed parallel to the laminating roller 51. Before being supplied, the support film 93 is wound on the film unwinding roller 521. The film unwinding roller 521 is rotated by the power of a motor not shown. The support film 93 is unwound from the film unwinding roller 521 by the rotation of the film unwinding roller 521.

Resins having a mechanical strength higher than that of the electrolyte membrane 92 and excellent in shape retaining function are used as the material of the support film 93. Specific examples of the support film 93 used herein include films made of PEN (polyethylene naphthalate) and PET (polyethylene terephthalate). The support film 93 may be the same as the base material 91. Also, the base material 91 wound on the base material winding roller 131 may be unwound as the support film 93 from the film unwinding roller 521.

The unwound support film 93 is turned around by contacting the outer peripheral surface of the third detection roller 522, and is transported toward the laminating roller 51. The third detection roller 522 detects the tension applied to the support film 93 in the film supply part 52 by measuring the load received from the support film 93 by means of a load cell. The controller 70 to be described later controls the number of rotations of the film unwinding roller 521 so that the tension of the support film 93 detected by the third detection roller 522 is equal to a previously set value.

The support film 93 having passed over the third detection roller 522 is introduced in between the electrolyte membrane 92 held on the outer peripheral surface of the suction roller 20 under suction and the laminating roller 51. At this time, the support film 93 is pressed against the electrolyte membrane 92 by the pressure received from the laminating roller 51, and is heated by the heat of the laminating roller 51. As a result, the support film 93 is affixed to the outside surface of the electrolyte membrane 92. The catalyst material 9b formed on the surface of the electrolyte membrane 92 is sandwiched between the electrolyte membrane 92 and the support film 93. This provides a catalyst-coated membrane 94 including the electrolyte membrane 92, the catalyst materials 9a and 9b and the support film 93.

The catalyst-coated membrane collection part 53 includes a catalyst-coated membrane winding roller 531 and a fourth detection roller 532. Both the catalyst-coated membrane winding roller 531 and the fourth detection roller 532 are disposed parallel to the laminating roller 51. The catalyst-coated membrane 94 having passed between the suction roller 20 and the laminating roller 51 is transported away from the suction roller 20 toward the fourth detection roller 532. Then, the catalyst-coated membrane 94 is turned around by contacting the outer peripheral surface of the fourth detection roller 532, and is transported toward the catalyst-coated membrane winding roller 531.

The catalyst-coated membrane winding roller 531 is rotated by the power of a motor not shown. Thus, the catalyst-coated membrane 94 is wound on the catalyst-coated membrane winding roller 531. The fourth detection roller 532 detects the tension applied to the catalyst-coated membrane 94 in the catalyst-coated membrane collection part 53 by measuring the load received from the catalyst-coated membrane 94 by means of a load cell. The controller 70 to be described later controls the number of rotations of the catalyst-coated membrane winding roller 531 so that the tension of the catalyst-coated membrane 94 detected by the fourth detection roller 532 is equal to a previously set value.

The surface cooling part 60 is a mechanism for cooling the outer peripheral surface of the suction roller 20. The surface cooling part 60 is disposed at a position opposed to a region of the outer peripheral surface of the suction roller 20 which lies between the affixing part 50 and the introduction and separation part 10 and which does not hold the electrolyte membrane 92 thereon. The surface cooling part 60 blows clean dry air at a temperature (e.g., approximately 5°C) lower than the environmental temperature, for example, onto the outer peripheral surface of the suction roller 20. The suction roller 20 heated by the drying furnace 40 and the laminating roller 51 is cooled by being exposed to the clean dry air.

In this manner, the steps of unwinding the elongated strip 90 from the membrane unwinding roller 121, separating the base material 91 from the electrolyte membrane 92, applying the catalyst ink to the electrolyte membrane 92, drying by means of the drying furnace 40, and affixing the support film 93 to the electrolyte membrane 92 are performed sequentially in the manufacturing apparatus 1 according to the present preferred embodiment. This manufactures the catalyst-coated membrane 94 used for the electrodes of the polymer electrolyte fuel cell. The electrolyte membrane 92 is always held by any one of the base material 91, the suction roller 20 and the support film 93. This suppresses the deformation, such as swelling and shrinking, of the electrolyte membrane 92 in the manufacturing apparatus 1.

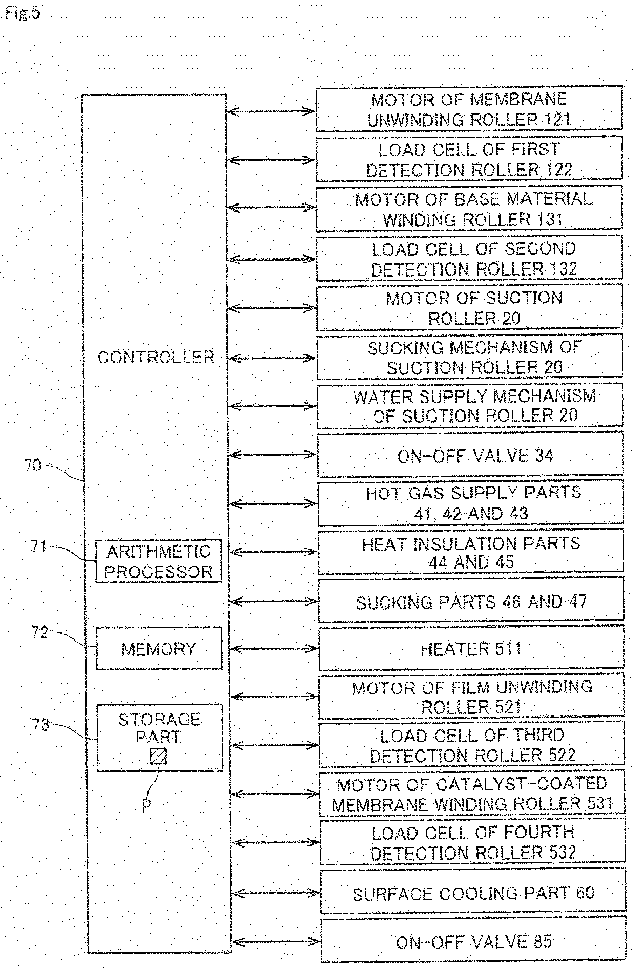

The controller 70 is a part for controlling the operations of the components in the manufacturing apparatus 1. Fig. 5 is a block diagram showing connections between the controller 70 and the components in the manufacturing apparatus 1. As conceptually shown in Fig. 5, the controller 70 includes a computer having an arithmetic processor 71 such as a CPU, a memory 72 such as a RAM, and a storage part 73 such as a hard disk drive. A computer program P for executing a printing process is installed in the storage part 73.

As shown in Fig. 5, the controller 70 is connected to the motor of the aforementioned membrane unwinding roller 121, the load cell of the first detection roller 122, the motor of the base material winding roller 131, the load cell of the second detection roller 132, the motor of the suction roller 20, the sucking mechanism of the suction roller 20, the water supply mechanism of the suction roller 20, the on-off valve 34, the three hot gas supply parts 41 to 43, the two heat insulation parts 44 and 45, the two sucking parts 46 and 47, the heater 511, the motor of the film unwinding roller 521, the load cell of the third detection roller 522. the motor of the catalyst-coated membrane winding roller 531, the load cell of the fourth detection roller 532, and the surface cooling part 60 for communication therewith. The controller 70 is also connected to an on-off valve 85 to be described later for communication therewith.

The controller 70 temporarily reads the computer program P and data that are stored in the storage part 73 onto the memory 72, and the arithmetic processor 71 performs arithmetic processing based on the computer program P, so that the controller 70 controls the operations of the aforementioned components. Thus, the process of manufacturing a catalyst-coated membrane in the manufacturing apparatus 1 proceeds.

### <2. Suppression of Lift of Electrolyte Membrane>

Next, description will be given on a configuration for suppressing the lift of the electrolyte membrane 92 from the suction roller 20 during the separation of the base material 91 from the electrolyte membrane 92.

### <2-1. Gas Supply Part>

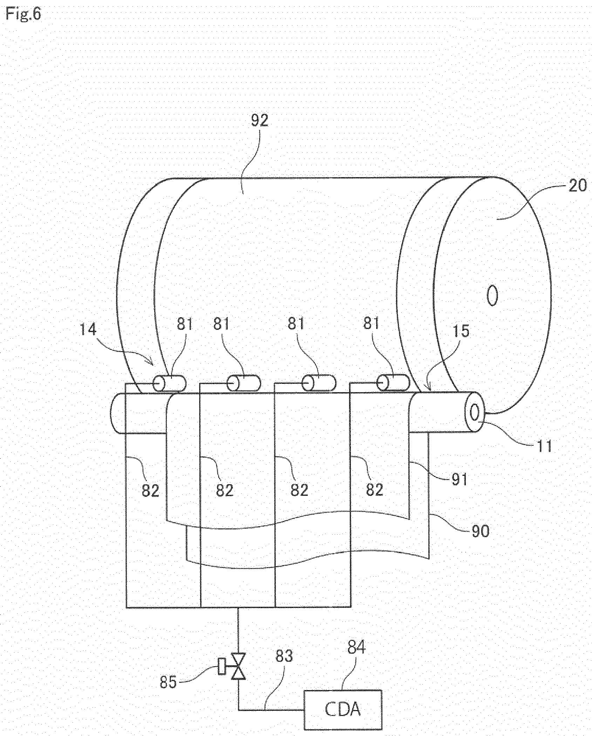

Fig. 6 is a perspective view of the separation roller 11, the gas supply part 14, and the suction roller 20. As shown in Fig. 6, the gas supply part 14 according to the present preferred embodiment includes a plurality of pipe nozzles 81 each having a tubular member that ejects a gas from the tip thereof. The pipe nozzles 81 are spaced substantially equidistantly in the width direction of the electrolyte membrane 92 (a direction orthogonal to the transport direction of the electrolyte membrane and parallel to the front and back surfaces of the electrolyte membrane). Each of the pipe nozzles 81 has an ejection orifice directed toward the front surface of the electrolyte membrane 92. As shown in Fig. 1, an angle θ between the location of the pipe nozzles 81 and the location of the coating nozzle 31 about the axis of the suction roller 20 is not greater than 90 degrees.

As conceptually shown in Fig. 6, flow passage connections are established between the pipe nozzles 81 and first ends of gas supply pipes 82, respectively. Flow passage connections are established between second ends of the gas supply pipes 82 and a first end of a single main pipe 83. A flow passage connection is established between a second end of the main pipe 83 and a gas supply source 84. The gas supply source 84 is filled with a gas at a pressure higher than atmospheric pressure. The on-off valve 85 is interposed in the path of the main pipe 83.

Thus, when the on-off valve 85 is opened, the gas is supplied from the gas supply source 84 through the main pipe 83 and the gas supply pipes 82 to the pipe nozzles 81. Then, the gas is ejected from the ejection orifices of the respective pipe nozzles 81 toward the front surface of the electrolyte membrane 92. For example, clean dry air may be used as the gas ejected from the pipe nozzles 81. A clean dry inert gas such as nitrogen gas may be used in place of the clean dry air. An electrical discharging air such as ionized gas to control static electricity charged on the electrolyte membrane 92 may be used in place of the clean dry air.

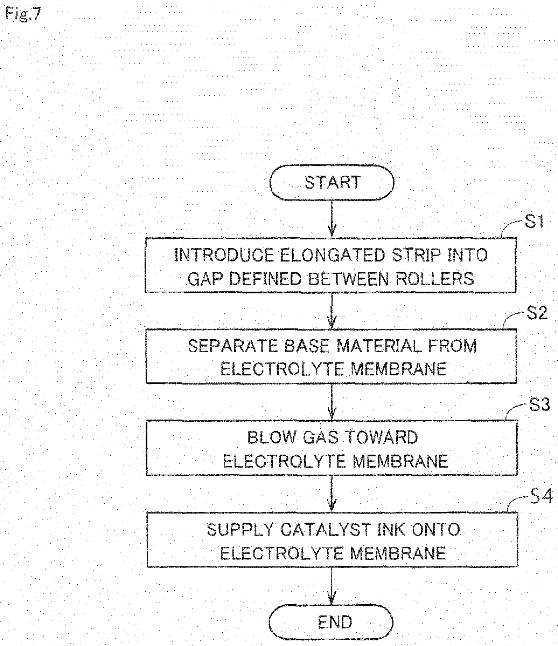

Fig. 7 is a flow diagram showing a procedure between the introduction of the elongated strip 90 and the supply of the catalyst ink. In this manufacturing apparatus 1, the elongated strip 90 unwound from the membrane unwinding roller 121 is initially introduced into the gap 15 defined between the suction roller 20 and the separation roller 11 (Step S1), as stated above. After passing through the gap 15, the electrolyte membrane 92 is held on the outer peripheral surface of the suction roller 20 under suction. After passing through the gap 15, the base material 91 is transported away from the outer peripheral surface of the suction roller 20. Thus, the base material 91 is separated from the electrolyte membrane 92 (Step S2). At this time, the gas supply part 14 blows the gas toward the electrolyte membrane 92 immediately after the separation (Step S3). This suppresses the lift of the electrolyte membrane 92 from the outer peripheral surface of the suction roller 20. Thereafter, the catalyst ink is supplied from the coating nozzle 31 onto the outside surface of the electrolyte membrane 92 held on the suction roller 20 under suction (Step S4).

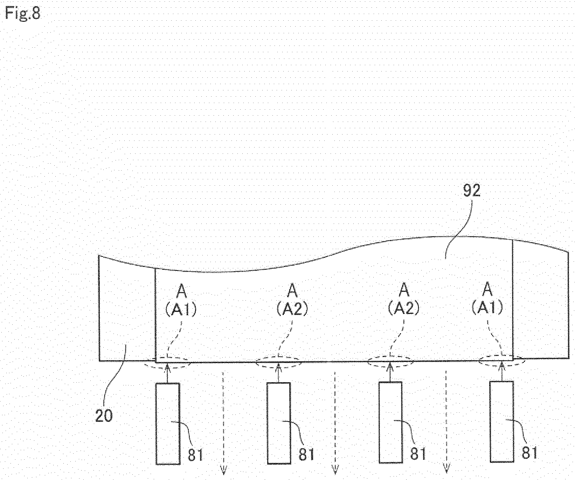

Fig. 8 is a view showing a widthwise positional relationship between the electrolyte membrane 92 held on the suction roller 20 and the pipe nozzles 81. As shown in Fig. 8, the pipe nozzles 81 blow the gas toward respective ejection regions A arranged in the width direction of the electrolyte membrane 92. Two of the pipe nozzles 81 disposed at opposite outermost positions as seen in the width direction blow the gas toward two (referred to hereinafter as "first ejection regions A1") of the ejection regions A positioned on opposite edges of the electrolyte membrane 92 as seen in the width direction. The remaining pipe nozzles 81 blow the gas toward the remaining ejection regions A (referred to hereinafter as "second ejection regions A2") positioned between the two first ejection regions A1. The electrolyte membrane 92 is pressed against the outer peripheral surface of the suction roller 20 by blowing the gas onto the electrolyte membrane 92 in this manner. This promotes the separation of the base material 91 from the electrolyte membrane 92 and suppresses the lift of the electrolyte membrane 92 together with the base material 91 from the outer peripheral surface of the suction roller 20.

In particular, parts of the outer peripheral surface of the suction roller 20 which come in contact with the opposite edges of the electrolyte membrane 92 as seen in the width direction are less prone to decrease in the pressure of the sucking port 21 because these parts are adjacent to parts thereof which are exposed to outside air without contacting the electrolyte membrane 92. For this reason, the force of suction caused by the sucking port 21 is poor near the opposite edges of the electrolyte membrane 92 as seen in the width direction. To solve such a problem, the gas supply part 14 blows the gas toward the pair of first ejection regions A1 positioned on the opposite edges of the electrolyte membrane 92 as seen in the width direction, as shown in Fig. 8. This suppresses the lift of the opposite edges of the electrolyte membrane 92 as seen in the width direction from the outer peripheral surface of the suction roller 20.

It is only necessary that the gas supply part 14 blows the gas toward at least the pair of first ejection regions A1 where the force of suction is poor. However, the lift of the electrolyte membrane 92 from the suction roller 20 is further suppressed by blowing the gas not only toward the first ejection regions A1 but also toward the second ejection regions A2 positioned inside the first ejection regions A1 as in the present preferred embodiment. The number of second ejection regions A2 may be either one or not less than one.

The gas supply part 14 does not uniformly blow the gas across the width of the electrolyte membrane 92 but blows the gas toward the ejection regions A discontinuous in the width direction. The gas blown onto the ejection regions A flows between adjacent ones of the pipe nozzles 81 away from the suction roller 20, as indicated by broken arrows in Fig. 8. This reduces the amount of gas flowing toward the coating nozzle 31, to thereby suppress the disturbance of the catalyst ink ejected from the coating nozzle 31 and the unintended drying of the catalyst ink due to the influence of the gas supply part 14. As a result, the occurrence of coating failures resulting from the gas supply part 14 is suppressed.

In particular, the pipe nozzles 81 and the coating nozzle 31 are disposed close to each other in the manufacturing apparatus 1. Specifically, the angle θ (angle of rotation of the electrolyte membrane 92 from Step S3 to Step S4) between the location of the pipe nozzles 81 and the location of the coating nozzle 31 about the axis of the suction roller 20 is not greater than 90 degrees. The gas blown from the gas supply part 14 is prone to flow toward the coating nozzle 31 because of such a positional relationship. It is hence especially important to ensure the flow passage of the gas ejected from the pipe nozzles 81 away from the suction roller 20, thereby suppressing the influence upon the coating nozzle 31.

Also, the pipe nozzles 81 according to the present preferred embodiment are disposed obliquely with respect to the radial direction of the suction roller 20, as shown in Fig. 2. The gas is ejected from the pipe nozzles 81 toward the gap 15 (away from the coating nozzle 31). This further reduces the amount of gas flowing toward the coating nozzle 31. As a result, the occurrence of coating failures resulting from the gas supply part 14 is further suppressed.

### <2-2. Rotation Speed Controller>

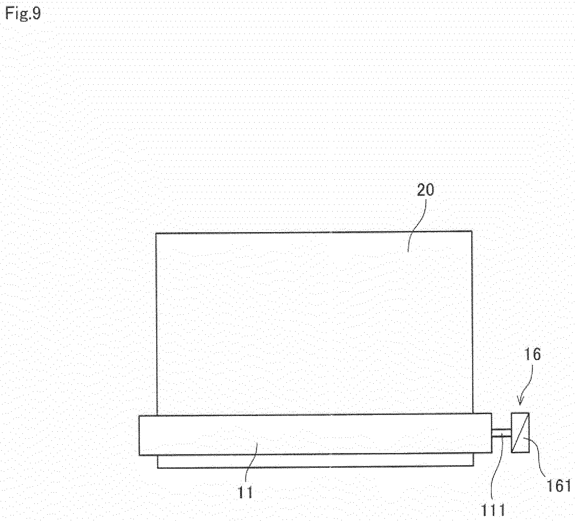

The manufacturing apparatus 1 further includes a rotation speed controller 16 that controls a relationship between the rotation speed of the suction roller 20 and the rotation speed of the separation roller 11. Fig. 9 is a side view showing the configurations of the suction roller 20, the separation roller 11, and the rotation speed controller 16.

The separation roller 11 according to the present preferred embodiment is not directly connected to a driving source such as a motor, but is a free roller that does not spontaneously rotate. As mentioned above, the separation roller 11 is pressurized toward the suction roller 20 by the air cylinder not shown. Thus, as the suction roller 20 rotates, the separation roller 11 is driven to rotate by the force received through the elongated strip 90. A braking part 161 serving as the rotation speed controller 16 is provided at an end of the rotary shaft 111 of the separation roller 11. An example of the braking part 161 used herein includes a powder clutch that generates a braking force through the use of the friction of powder.

When the separation roller 11 is rotated, the braking part 161 produces a resisting force in a direction opposing the rotation of the separation roller 11. This provides a load to the rotation of the separation roller 11. As a result, the moving speed (indicated by an arrow v2 in Fig. 2) of the outer peripheral surface of the separation roller 11 in the gap 15 is slightly lower than the moving speed (indicated by an arrow v1 in Fig. 2) of the outer peripheral surface of the suction roller 20 in the gap 15. In this manner, the decrease in the rotation speed of the separation roller 11 weakens the force with which the base material 91 in contact with the separation roller 11 attracts the electrolyte membrane 92 toward the separation roller 11. Thus, the separation of the base material 91 from the electrolyte membrane 92 is promoted. As a result, the lift of the electrolyte membrane 92 from the outer peripheral surface of the suction roller 20 is further suppressed.

When the outer peripheral surface of the separation roller 11 and the base material 91 are not movable relative to each other, the transport speed of the base material 91 is lower than the transport speed of the electrolyte membrane 92. At this time, there is a danger that an excessive tension is applied to the electrolyte membrane 92 to damage the electrolyte membrane 92. It is hence preferable that the separation roller 11 is rotated slidably relative to the base material 91.

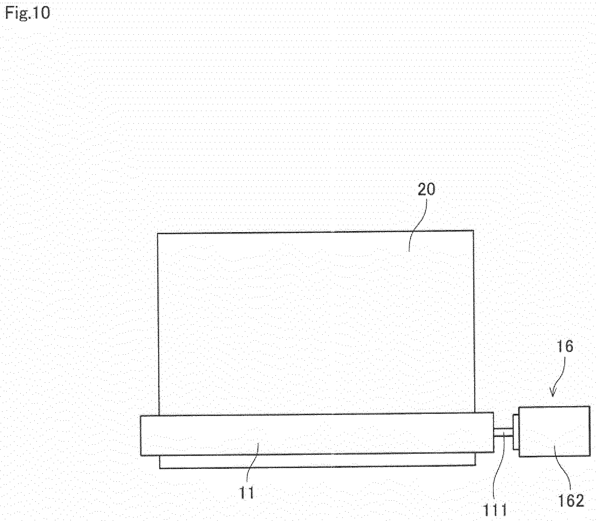

The separation roller 11 may be spontaneously rotated while the speed of rotation of the separation roller 11 is controlled. For example, as shown in Fig. 10, a servomotor 162 serving as the rotation speed controller 16 may be connected to an end of the rotary shaft 111 of the separation roller 11. The servomotor 162 is connected to the aforementioned controller 70, and is a motor whose RPM (the number of revolutions) is controllable based on a control signal supplied from the controller 70. In the configuration shown in Fig. 10, the controller 70 controls the RPM of the servomotor 162 so that the moving speed of the outer peripheral surface of the separation roller 11 in the gap 15 is slightly lower than the moving speed of the outer peripheral surface of the suction roller 20 in the gap 15. This promotes the separation of the base material 91 from the electrolyte membrane 92 to suppress the lift of the electrolyte membrane 92 from the suction roller 20.

### <2-3. Tension Control>

As described above, the controller 70 controls the number of rotations of the membrane unwinding roller 121 so that the tension of the elongated strip 90 detected by the first detection roller 122 is equal to a previously set value (referred to hereinafter as a "first set value"). Thus, the tension of the elongated strip 90 in the introduction part 12 is maintained at the first set value that is fixed. The controller 70 also controls the number of rotations of the base material winding roller 131 so that the tension of the base material 91 detected by the second detection roller 132 is equal to a previously set value (referred to hereinafter as a "second set value"). Thus, the tension of the base material 91 in the discharge part 13 is maintained at the second set value that is fixed.

In other words, the membrane unwinding roller 121, the first detection roller 122, the base material winding roller 131, and the second detection roller 132 in the present preferred embodiment constitute a tension controller that controls a relationship between the tension of the elongated strip 90 in the introduction part 12 and the tension of the base material 91 in the discharge part 13.

In the manufacturing apparatus 1 according to the present preferred embodiment, the aforementioned second set value is lower than the aforementioned first set value. Thus, the control of the number of rotations of the membrane unwinding roller 121 and the number of rotations of the base material winding roller 131 causes the tension of the base material 91 in the discharge part 13 to be lower than the tension of the elongated strip 90 in the introduction part 12. The force with which the base material 91 attracts the electrolyte membrane 92 is weakened by making the tension of the base material 91 after the separation lower than the tension of the elongated strip 90 introduced into the gap 15. Thus, the separation of the base material 91 from the electrolyte membrane 92 is promoted. As a result, the lift of the electrolyte membrane 92 from the outer peripheral surface of the suction roller 20 is further suppressed.

### <3. Modifications>

While the one preferred embodiment according to the present invention has been described hereinabove, the present invention is not limited to the aforementioned preferred embodiment.

In the aforementioned preferred embodiment, the pipe nozzles 81 are used in the gas supply part 14. However, the gas supply part 14 may include nozzles other than the pipe nozzles. For example, a plurality of nozzles having ejection orifices in the form of slits extending in the transport direction of the electrolyte membrane 92 may be arranged in the width direction of the electrolyte membrane 92.

In the aforementioned preferred embodiment, the angle θ (with reference to Fig. 1) between the location of the pipe nozzles 81 and the location of the coating nozzle 31 about the axis of the suction roller 20 is not greater than 90 degrees. However, the angle θ between the location of the pipe nozzles 81 and the location of the coating nozzle 31 may be greater than 90 degrees. The increase in the angle θ between the location of the pipe nozzles 81 and the location of the coating nozzle 31 makes the gas ejected from the pipe nozzles 81 less prone to reach the coating nozzle 31. This further suppresses the disturbance of the catalyst ink ejected from the coating nozzle 31 and the unintended drying of the catalyst ink due to the influence of the gas supply part 14.

In the aforementioned preferred embodiment, the catalyst material 9b is formed on one of the surfaces of the electrolyte membrane 92 with the layer of catalyst material 9a previously formed on the other surface thereof. However, the manufacturing apparatus according to the present invention may be configured to form the catalyst material on the electrolyte membrane with the layer of catalyst material 9a not formed on the opposite surfaces thereof.

While the invention has been described in detail, the foregoing description is in all aspects illustrative and not restrictive.

## Claims

1. An apparatus (1) adapted to manufacture a catalyst-coated membrane (94),
the apparatus being adapted to separate an electrolyte membrane (92) from an elongated strip (90) comprised of at least two layers of a base material (91) and the electrolyte membrane (92) to form a catalyst layer on a surface of the separated electrolyte membrane, the apparatus comprising:
- a suction roller (20) having an outer peripheral surface and rotating in a first direction about its axis while holding said electrolyte membrane (92) on the outer peripheral surface under suction;
- an introduction and separation part (10) adapted to introduce said elongated strip (90) with said base material (91) positioned outside onto the outer peripheral surface of said suction roller (20), and adapted to separate said base material (91) from said electrolyte membrane (92); and
- a catalyst supply part (30) adapted to supply a catalyst material (9b) to the outside surface of said electrolyte membrane (92) held on said suction roller (20) under suction,
- said introduction and separation part (10) further including
- a separation roller (11) opposed to said suction roller (20), with a gap (15) therebetween through which said elongated strip (90) passes, said separation roller (11) rotating in a second direction different from said first direction about an axis parallel to said suction roller (20),
- an introduction part (12) adapted to introduce said elongated strip (90) toward said gap (15),
- a discharge part (13) adapted to transport said base material (91) having passed through said gap (15) away from the outer peripheral surface of said suction roller (20),
**characterized in that** said introduction and separation part (10) further includes
- a gas supply part (14) located downstream of said gap (15) as seen in a transport direction in which said electrolyte membrane (92) is transported, disposed so as to point toward the outside surface of said electrolyte membrane (92) having passed through said gap (15) and held on said suction roller (20) under suction, and adapted to blow a gas onto the outside surface of said electrolyte membrane (92) immediately after the separation from said base material (91) so as to promote the separation of said base material (91) from said electrolyte membrane (92),
- said gas supply part (14) including
a plurality of tubular pipe nozzles (81) aligned at intervals in the width direction of said electrolyte membrane (92),
gas supply pipes (82), first ends of which are connected to the plurality of pipe nozzles (81),
a main pipe (83) connected to second ends of said gas supply pipes (82), and an on-off valve (85) interposed in the path of said main pipe (83),
by opening said on-off valve (85), two of said pipe nozzles (81) blowing the gas toward respective ejection regions (A1) positioned on opposite edges of said electrolyte membrane (92) as seen in the width direction, at least one of said pipe nozzles (81) blowing the gas toward at least one ejection region (A2) positioned between said opposite edges, thereby blowing the gas toward a plurality of ejection regions (A) discontinuous in the width direction of said electrolyte membrane (92) and including at least said opposite edges of said electrolyte membrane (92) as seen in the width direction of said electrolyte membrane (92).

2. The apparatus according to claim 1, wherein
an angle (θ) between said gas supply part (14) and said catalyst supply part (30) about said axis of said suction roller (20) is not greater than 90 degrees.

3. The apparatus according to any one of claims 1 to 2, further comprising
a tension controller adapted to control a relationship between the tension of said elongated strip (90) in said introduction part (12) and the tension of said base material (91) in said discharge part (13) by controlling the number of rotations of a membrane unwinding roller (121) included in said introduction part (12) so that the tension of said elongated strip (90) is equal to a previously set first set value and the number of rotations of a base material winding roller (131) included in said discharge part (13) so that the tension of said base material (91) is equal to a previously set second set value.

4. The apparatus according to claim 3, wherein
said tension controller is adapted to make the tension of said base material (91) in said discharge part (13) lower than the tension of said elongated strip (90) in said introduction part (12) by said second set value being lower than said first set value.

5. The apparatus according to any one of claims 1 to 4, wherein said separation roller (11) is driven to rotate as said suction roller (20) rotates, the apparatus further comprising:
a rotation speed controller adapted to control a relationship between the rotation speed of said suction roller (20) and the rotation speed of said separation roller (11), wherein said rotation speed controller includes a braking part (161) adapted to provide a load to the rotation of said separation roller (11).

6. The apparatus according to claim 5, wherein
said rotation speed controller is adapted to make the moving speed of the outer peripheral surface of said separation roller (11) in said gap lower than the moving speed of the outer peripheral surface of said suction roller (20) in said gap (15) by said breaking part (161).

7. The apparatus according to claim 6, wherein
said rotation speed controller includes a servomotor (162) capable of controlling the number of rotations of said separation roller (11).

8. The apparatus according to any one of claims 6 to 7, wherein
said separation roller (11) is adapted to be rotated slidably relative to said base material (91) and is movable relative to said base material (91).

9. A method of manufacturing a catalyst-coated membrane (94), the method separating an electrolyte membrane from an elongated strip (90) comprised of at least two layers of a base material and the electrolyte membrane to form a catalyst layer on a surface of the separated electrolyte membrane, the method comprising the steps of:
a) introducing said elongated strip (90) into a gap (15) defined between a suction roller (20) and a separation roller (11) disposed parallel to each other;
b) holding said electrolyte membrane (92) having passed through said gap (15) on said suction roller (20) under suction and transporting said base material (91) having passed through said gap (15) away from the outer peripheral surface of said suction roller (20) to thereby separate said base material (91) from said electrolyte membrane (92);
c) promoting the separation of said base material (91) from said electrolyte membrane (92) by, at a position downstream of said gap (15) as seen in a transport direction in which said electrolyte membrane (92) is transported, blowing a gas onto the outside surface of said electrolyte membrane (92) having passed through said gap (15) and held on said suction roller (20) under suction, so that the separation is promoted by blowing the gas onto the outside surface of said electrolyte membrane (92) immediately after the separation from the said base material (91); and
d) supplying a catalyst material (9b) to the outside surface of said electrolyte membrane (92) held on said suction roller (20) under suction,
wherein
two of a plurality of tubular pipe nozzles (81) aligned at intervals in the width direction of said electrolyte membrane (92) blow the gas toward respective ejection regions (A1) positioned on opposite edges of said electrolyte membrane (92) as seen in the width direction, and at least one of said pipe nozzles (81) blowing the gas toward at least one ejection region (A2) positioned between said opposite edges, thereby blowing the gas toward a plurality of ejection regions (A) discontinuous in the width direction of said electrolyte membrane (92) and including at least said opposite edges of said electrolyte membrane (92) as seen in the width direction of the electrolyte membrane (92) in said step c).

10. The method according to claim 9, wherein
an angle of rotation (0) of said electrolyte membrane between said steps c) and d) is not greater than 90 degrees.

11. The method according to any one of claims 9 to 10, wherein
a relationship between the tension of said elongated strip (90) introduced into said gap (15) and the tension of said base material (91) after the separation is controlled in said step b) by controlling the number of rotations of a membrane unwinding roller (121) for unwinding said elongated strip (90) so that the tension of said elongated strip (90) is equal to a previously set first set value and the number of rotations of a base material winding roller (131) for winding said base material so that the tension of said base material (91) is equal to a previously set second set value.

12. The method according to claim 11, wherein
the tension of said base material (91) after the separation is made lower than the tension of said elongated strip (90) introduced into said gap (15) in said step b) by said second set value being lower than said first set value.

13. The method according to any one of claims 9 to 12, wherein
a relationship between the rotation speed of said suction roller (20) and the rotation speed of said separation roller (11) is controlled in said step b) by providing a load to the rotation of said separation roller (11).

14. The method according to claim 13, wherein
the moving speed of the outer peripheral surface of said separation roller (11) in said gap (15) is made lower than the moving speed of the outer peripheral surface of said suction roller (20) in said gap in said step b) by providing the load to the rotation of said separation roller (11).

15. The method according to claim 14, wherein
said separation roller (11) is rotated slidably relative to said base material (91) and is movable relative to said base material (91) in said step b).

## Patentansprüche

1. Vorrichtung (1), die zur Herstellung einer katalysatorbeschichteten Membran (94) eingerichtet ist, wobei die Vorrichtung eingerichtet ist, eine Elektrolytmembran (92) von einem länglichen Streifen (90), der mindestens zwei Schichten eines Basismaterials (91) und der Elektrolytmembran (92) umfasst, zu trennen, um eine Katalysatorschicht auf einer Oberfläche der getrennten Elektrolytmembran zu bilden, wobei die Vorrichtung umfasst:
- eine Saugwalze (20) mit einer äußeren Umfangsfläche, die sich in einer ersten Richtung um ihre Achse dreht, während diese die Elektrolytmembran (92) auf der äußeren Umfangsfläche unter Saugwirkung hält;
- einen Einführungs- und Abtrennteil (10), der eingerichtet ist, den länglichen Streifen (90) mit dem Basismaterial (91), das außen positioniert ist, auf die äußere Umfangsfläche der Saugwalze (20) einzuführen, und eingerichtet ist, das Basismaterial (91) von der Elektrolytmembran (92) zu trennen; und
- einen Katalysatorzuführungsteil (30), der eingerichtet ist, ein Katalysatormaterial (9b) der Außenfläche der Elektrolytmembran (92) zuzuführen, die auf der Saugwalze (20) unter Saugwirkung gehalten wird,
- wobei der Einführungs- und Abtrennteil (10) ferner umfasst
- eine Trennwalze (11), die der Saugwalze (20) gegenüberliegt, mit einem Spalt (15) dazwischen, den der längliche Streifen (90) durchläuft, wobei sich die Trennwalze (11) in einer zweiten Richtung, die sich von der ersten Richtung unterscheidet, um eine Achse parallel zur Saugwalze (20) dreht,
- einen Einführungsteil (12), der eingerichtet ist, den länglichen Streifen (90) in den Spalt (15) einzuführen,
- einen Ausgabeteil (13), der eingerichtet ist, das Basismaterial (91), das den Spalt (15) durchlaufen hat, von der äußeren Umfangsfläche der Saugwalze (20) weg zu transportieren, **dadurch gekennzeichnet, dass** der Einführungs- und Abtrennteil (10) ferner umfasst
- einen Gaszuführungsteil (14), der gesehen in einer Transportrichtung, in der die Elektrolytmembran (92) transportiert wird, stromabwärts des Spalts (15) angeordnet ist, derart angeordnet, dass dieser auf die Außenfläche der Elektrolytmembran (92) zeigt, die den Spalt (15) durchlaufen hat und auf der Saugwalze (20) unter Saugwirkung gehalten wird, und eingerichtet, Gas auf die Außenfläche der Elektrolytmembran (92) unmittelbar nach der Trennung von dem Basismaterial (91) zu blasen, um die Trennung des Basismaterials (91) von der Elektrolytmembran (92) zu fördern,
- wobei der Gaszuführungsteil (14) umfasst
eine Vielzahl von röhrenförmigen Rohrdüsen (81), die in Abständen in der Breitenrichtung der Elektrolytmembran (92) angeordnet sind,
Gaszuführungsrohre (82), deren erste Enden mit der Vielzahl von Rohrdüsen (81) verbunden sind,
ein Hauptrohr (83), das mit den zweiten Enden der Gaszuführungsrohre (82) verbunden ist, und ein Ein-Aus-Ventil (85), das in den Pfad des Hauptrohrs (83) eingefügt ist,
wobei, durch Öffnen des Ein-Aus-Ventils (85), zwei der Rohrdüsen (81) das Gas in Richtung der jeweiligen Ausstoßbereiche (A1) blasen, die an gegenüberliegenden Rändern der Elektrolytmembran (92), in Breitenrichtung gesehen, angeordnet sind, mindestens eine der Rohrdüsen (81) das Gas in Richtung mindestens eines Ausstoßbereichs (A2) bläst, der zwischen den gegenüberliegenden Rändern angeordnet ist, wodurch das Gas in Richtung einer Vielzahl von Ausstoßbereichen (A) geblasen wird, die in der Breitenrichtung der Elektrolytmembran (92) diskontinuierlich sind und zumindest die gegenüberliegenden Ränder der Elektrolytmembran (92), in der Breitenrichtung der Elektrolytmembran (92) gesehen, umfassen.

2. Vorrichtung nach Anspruch 1, wobei
ein Winkel (θ) zwischen dem Gaszuführungsteil (14) und dem Katalysatorzuführungsteil (30) um die Achse der Saugwalze (20) nicht größer als 90 Grad ist.

3. Vorrichtung nach einem der Ansprüche 1 bis 2, ferner umfassend
eine Spannungssteuerung, die eingerichtet ist, ein Verhältnis zwischen der Spannung des länglichen Streifens (90) in dem Einführungsteil (12) und der Spannung des Basismaterials (91) in dem Ausgabeteil (13) zu steuern, durch derartiges Steuern der Anzahl der Umdrehungen einer Membranabwickelwalze (121) in dem Einführungsteil (12), dass die Spannung des länglichen Streifens (90) einem zuvor eingestellten ersten Sollwert entspricht, und der Anzahl der Umdrehungen einer Basismaterialaufwickelwalze (131) in dem Ausgabeteil (13), dass die Spannung des Basismaterials (91) einem zuvor eingestellten zweiten Sollwert entspricht.

4. Vorrichtung nach Anspruch 3, wobei
die Spannungssteuerung eingerichtet ist, die Spannung des Basismaterials (91) in dem Ausgabeteil (13) niedriger als die Spannung des länglichen Streifens (90) in dem Einführungsteil (12) zu machen, indem der zweite Sollwert niedriger ist als der erste Sollwert.

5. Vorrichtung nach einem der Ansprüche 1 bis 4, wobei die Trennwalze (11) angetrieben wird, um sich zu drehen, wenn sich die Saugwalze (20) dreht, wobei die Vorrichtung ferner umfasst:
eine Drehgeschwindigkeitssteuerung, die eingerichtet ist, ein Verhältnis zwischen der Drehgeschwindigkeit der Saugwalze (20) und der Drehgeschwindigkeit der Trennwalze (11) zu steuern, wobei die Drehgeschwindigkeitssteuerung einen Bremsteil (161) umfasst, der eingerichtet ist, eine Last auf die Drehung der Trennwalze (11) bereitzustellen.

6. Vorrichtung nach Anspruch 5, wobei
die Drehgeschwindigkeitssteuerung eingerichtet ist, die Bewegungsgeschwindigkeit der äußeren Umfangsfläche der Trennwalze (11) in dem Spalt niedriger zu machen als die Bewegungsgeschwindigkeit der äußeren Umfangsfläche der Saugwalze (20) in dem Spalt (15) durch den Bremsteil (161).

7. Vorrichtung nach Anspruch 6, wobei
die Drehgeschwindigkeitssteuerung einen Servomotor (162) umfasst, der die Anzahl der Umdrehungen der Trennwalze (11) steuern kann.

8. Vorrichtung nach einem der Ansprüche 6 bis 7, wobei
die Trennwalze (11) eingerichtet ist, relativ zu dem Basismaterial (91) gleitend gedreht zu werden und relativ zu dem Basismaterial (91) beweglich zu sein.

9. Verfahren zur Herstellung einer katalysatorbeschichteten Membran (94), wobei im Verfahren eine Elektrolytmembran von einem länglichen Streifen (90) getrennt wird, der mindestens zwei Schichten eines Basismaterials und der Elektrolytmembran umfasst, um eine Katalysatorschicht auf einer Oberfläche der abgetrennten Elektrolytmembran zu bilden, wobei das Verfahren die folgenden Schritte umfasst:
a) Einführen des länglichen Streifens (90) in einen Spalt (15), der zwischen einer Saugwalze (20) und einer Trennwalze (11), die parallel zueinander angeordnet sind, definiert ist;
b) Halten der Elektrolytmembran (92), die den Spalt (15) durchlaufen hat, auf der Saugwalze (20) unter Saugwirkung und Transportieren des Basismaterials (91), das den Spalt (15) durchlaufen hat, weg von der äußeren Umfangsfläche der Saugwalze (20), um dadurch das Basismaterial (91) von der Elektrolytmembran (92) zu trennen;
c) Fördern des Trennens des Basismaterials (91) von der Elektrolytmembran (92) durch Blasen eines Gases auf die Außenfläche der Elektrolytmembran (92) an einer Position stromabwärts des Spalts (15), gesehen in einer Transportrichtung, in der die Elektrolytmembran (92) transportiert wird, nachdem diese den Spalt (15) durchlaufen hat und auf der Saugwalze (20) unter Unterdruck derart gehalten wird, dass die Trennung durch Blasen des Gases auf die Außenfläche der Elektrolytmembran (92) unmittelbar nach der Trennung von dem Basismaterial (91) gefördert wird; und
d) Zuführen eines Katalysatormaterials (9b) an die Außenfläche der Elektrolytmembran (92), die auf der Saugwalze (20) unter Saugwirkung gehalten wird,
wobei
zwei aus einer Vielzahl von röhrenförmigen Rohrdüsen (81), die in der Breitenrichtung der Elektrolytmembran (92) beanstandet ausgerichtet sind, das Gas zu jeweiligen Ausstoßbereichen (A1) blasen, die an gegenüberliegenden Rändern der Elektrolytmembran (92), gesehen in der Breitenrichtung, positioniert sind, und mindestens eine der Rohrdüsen (81) das Gas zu mindestens einem Ausstoßbereich (A2) bläst, der zwischen den gegenüberliegenden Rändern positioniert ist, wodurch das Gas zu einer Vielzahl von Ausstoßbereichen (A) geblasen wird, die in der Breitenrichtung der Elektrolytmembran (92) diskontinuierlich sind und zumindest die gegenüberliegenden Ränder der Elektrolytmembran (92), gesehen in der Breitenrichtung der Elektrolytmembran (92), in dem Schritt c) einschließen.

10. Verfahren nach Anspruch 9, wobei
ein Drehwinkel (θ) der Elektrolytmembran zwischen den Schritten c) und d) nicht größer als 90 Grad ist.

11. Verfahren nach einem der Ansprüche 9 bis 10, wobei
ein Verhältnis zwischen der Spannung des in den Spalt (15) eingeführten länglichen Streifens (90) und der Spannung des Basismaterials (91) nach der Trennung in Schritt b) gesteuert wird, indem die Anzahl der Umdrehungen einer Membranabwickelwalze (121) zum Abwickeln des länglichen Streifens (90) derart gesteuert wird, dass die Spannung des länglichen Streifens (90) gleich einem vorher eingestellten ersten Sollwert ist, und indem die Anzahl der Umdrehungen einer Basismaterialaufwickelwalze (131) zum Aufwickeln des Basismaterials derart gesteuert wird, dass die Spannung des Basismaterials (91) gleich einem vorher eingestellten zweiten Sollwert ist.

12. Verfahren nach Anspruch 11, wobei
die Spannung des Basismaterials (91) nach der Trennung geringer gemacht wird als die Spannung des länglichen Streifens (90), der im Schritt b) in den Spalt (15) eingeführt wird, indem
der zweite Sollwert ist niedriger als der erste Sollwert.

13. Verfahren nach einem der Ansprüche 9 bis 12, wobei
ein Verhältnis zwischen der Drehgeschwindigkeit der Saugwalze (20) und der Drehgeschwindigkeit der Trennwalze (11) in dem Schritt b) gesteuert wird, indem die Drehung der Trennwalze (11) mit einer Last beaufschlagt wird.

14. Verfahren nach Anspruch 13, wobei
die Bewegungsgeschwindigkeit der äußeren Umfangsfläche der Trennwalze (11) in dem Spalt (15) niedriger gemacht wird als die Bewegungsgeschwindigkeit der äußeren Umfangsfläche der Saugwalze (20) in dem Spalt in dem Schritt b) durch Bereitstellen der Last für die Drehung der Trennwalze (11).

15. Verfahren nach Anspruch 14, wobei
die Trennwalze (11) relativ zu dem Basismaterial (91) gleitend gedreht wird und in dem Schritt b) relativ zu dem Basismaterial (91) beweglich ist.

## Revendications

1. Appareil (1) adapté pour fabriquer une membrane revêtue de catalyseur (94),
l'appareil étant adapté pour séparer une membrane électrolytique (92) d'une bande allongée (90) composée d'au moins deux couches d'un matériau de base (91) et de la membrane électrolytique (92) afin de former une couche de catalyseur sur une surface de la membrane électrolytique séparée, l'appareil comprenant :
- un rouleau d'aspiration (20) ayant une surface périphérique extérieure et tournant dans une première direction autour de son axe tout en maintenant ladite membrane électrolytique (92) sur la surface périphérique extérieure sous aspiration ;
- une partie d'introduction et de séparation (10) adaptée pour introduire ladite bande allongée (90) avec ledit matériau de base (91) positionné à l'extérieur sur la surface périphérique extérieure dudit rouleau d'aspiration (20), et adaptée pour séparer ledit matériau de base (91) de ladite membrane électrolytique (92) ; et
- une partie de fourniture de catalyseur (30) adaptée pour fournir un matériau catalyseur (9b) à la surface extérieure de ladite membrane électrolytique (92) maintenue sur ledit rouleau d'aspiration (20) sous aspiration,
- ladite partie d'introduction et de séparation (10) incluant en outre
- un rouleau de séparation (11) opposé audit rouleau d'aspiration (20), avec un espace (15) entre eux à travers lequel passe ladite bande allongée (90), ledit rouleau de séparation (11) tournant dans une deuxième direction différente de ladite première direction autour d'un axe parallèle audit rouleau d'aspiration (20),
- une partie d'introduction (12) adaptée pour introduire ladite bande allongée (90) vers ledit espace (15),
- une partie de décharge (13) adaptée pour transporter ledit matériau de base (91) ayant traversé ledit espace (15) à l'écart de la surface périphérique extérieure dudit rouleau d'aspiration (20),
**caractérisé en ce que** ladite partie d'introduction et de séparation (10) inclut en outre
- une partie de fourniture de gaz (14) située en aval dudit espace (15) tel que vu dans une direction de transport dans laquelle ladite membrane électrolytique (92) est transportée, disposée de manière à pointer vers la surface extérieure de ladite membrane électrolytique (92) ayant traversé ledit espace (15) et maintenue sur ledit rouleau d'aspiration (20) sous aspiration, et adaptée pour souffler un gaz sur la surface extérieure de ladite membrane électrolytique (92) immédiatement après la séparation dudit matériau de base (91) afin de favoriser la séparation dudit matériau de base (91) de ladite membrane électrolytique (92),
- ladite partie de fourniture de gaz (14) incluant
une pluralité de buses à tuyaux tubulaires (81) alignées à intervalles dans la direction de la largeur de ladite membrane électrolytique (92),
des tuyaux de fourniture de gaz (82), dont les premières extrémités sont raccordées à la pluralité de buses à tuyaux (81),
un tuyau principal (83) relié aux deuxièmes extrémités desdits tuyaux de fourniture de gaz (82), et une soupape marche-arrêt (85) interposée dans le trajet dudit tuyau principal (83),
en ouvrant ladite soupape marche-arrêt (85), deux desdites buses à tuyaux (81) soufflant le gaz vers des zones d'éjection respectives (A1) situées sur les bords opposés de ladite membrane électrolytique (92) vus dans la direction de la largeur, au moins une desdites buses à tuyaux (81) soufflant le gaz vers au moins une zone d'éjection (A2) située entre lesdits bords opposés, soufflant ainsi le gaz vers une pluralité de zones d'éjection (A) discontinues dans la direction de la largeur de ladite membrane électrolytique (92) et comprenant au moins lesdits bords opposés de ladite membrane électrolytique (92) vus dans la direction de la largeur de ladite membrane électrolytique (92).

2. Appareil selon la revendication 1, dans lequel
un angle (θ) entre ladite partie de fourniture de gaz (14) et ladite partie de fourniture de catalyseur (30) autour dudit axe dudit rouleau d'aspiration (20) n'est pas supérieur à 90 degrés.

3. Appareil selon l'une quelconque des revendications 1 et 2, comprenant en outre
un régulateur de tension adapté pour réguler une relation entre la tension de ladite bande allongée (90) dans ladite partie d'introduction (12) et la tension dudit matériau de base (91) dans ladite partie de décharge (13) en régulant le nombre de rotations d'un rouleau de déroulement de membrane (121) inclus dans ladite partie d'introduction (12) de manière à ce que la tension de ladite bande allongée (90) soit égale à une première valeur de réglage prédéfinie, et le nombre de rotations d'un rouleau d'enroulement de matériau de base (131) inclus dans ladite partie de décharge (13) de manière à ce que la tension dudit matériau de base (91) soit égale à une deuxième valeur de réglage prédéfinie.

4. Appareil selon la revendication 3, dans lequel
ledit régulateur de tension est adapté pour rendre la tension dudit matériau de base (91) dans ladite partie de décharge (13) inférieure à la tension de ladite bande allongée (90) dans ladite partie d'introduction (12) par le fait que ladite deuxième valeur de réglage est inférieure à ladite première valeur de réglage.

5. Appareil selon l'une quelconque des revendications 1 à 4, dans lequel ledit rouleau de séparation (11) est entraîné en rotation lorsque ledit rouleau d'aspiration (20) tourne, l'appareil comprenant en outre :
un régulateur de vitesse de rotation adapté pour réguler une relation entre la vitesse de rotation dudit rouleau d'aspiration (20) et la vitesse de rotation dudit rouleau de séparation (11), ledit régulateur de vitesse de rotation incluant une partie de freinage (161) adaptée pour fournir une charge à la rotation dudit rouleau de séparation (11).

6. Appareil selon la revendication 5, dans lequel
ledit régulateur de vitesse de rotation est adapté pour rendre la vitesse de déplacement de la surface périphérique extérieure dudit rouleau de séparation (11) dans ledit espace inférieure à la vitesse de déplacement de la surface périphérique extérieure dudit rouleau d'aspiration (20) dans ledit espace (15) par ladite partie de freinage (161).

7. Appareil selon la revendication 6, dans lequel
ledit régulateur de vitesse de rotation inclut un servomoteur (162) capable de réguler le nombre de rotations dudit rouleau de séparation (11).

8. Appareil selon l'une quelconque des revendications 6 et 7, dans lequel
ledit rouleau de séparation (11) est adapté pour tourner de manière coulissante par rapport audit matériau de base (91) et est mobile par rapport audit matériau de base (91).

9. Procédé de fabrication d'une membrane revêtue de catalyseur (94), le procédé séparant une membrane électrolytique d'une bande allongée (90) composée d'au moins deux couches d'un matériau de base et de la membrane électrolytique pour former une couche de catalyseur sur une surface de la membrane électrolytique séparée, le procédé comprenant les étapes suivantes :
a) l'introduction de ladite bande allongée (90) dans un espace (15) défini entre un rouleau d'aspiration (20) et un rouleau de séparation (11) disposés parallèlement l'un à l'autre ;
b) le maintien de ladite membrane électrolytique (92) ayant traversé ledit espace (15) sur ledit rouleau d'aspiration (20) sous aspiration et le transport dudit matériau de base (91) ayant traversé ledit espace (15) à l'écart de la surface périphérique extérieure dudit rouleau d'aspiration (20) afin de séparer ainsi ledit matériau de base (91) de ladite membrane électrolytique (92) ;
c) le fait de favoriser la séparation dudit matériau de base (91) de ladite membrane électrolytique (92) en soufflant, à une position en aval dudit espace (15) vu dans une direction de transport dans laquelle ladite membrane électrolytique (92) est transportée, un gaz sur la surface extérieure de ladite membrane électrolytique (92) ayant traversé ledit espace (15) et maintenue sur ledit rouleau d'aspiration (20) sous aspiration, de telle sorte que la séparation soit favorisée par le soufflage du gaz sur la surface extérieure de ladite membrane électrolytique (92) immédiatement après la séparation dudit matériau de base (91) ; et
d) la fourniture d'un matériau catalyseur (9b) à la surface extérieure de ladite membrane électrolytique (92) maintenue sur ledit rouleau d'aspiration (20) sous aspiration,
dans lequel
deux d'une pluralité de buses à tuyaux tubulaires (81) alignées à des intervalles dans la direction de la largeur de ladite membrane électrolytique (92) soufflent le gaz vers des zones d'éjection respectives (A1) positionnées sur les bords opposés de ladite membrane électrolytique (92) vus dans la direction de la largeur, et au moins une desdites buses à tuyaux (81) souffle le gaz vers au moins une zone d'éjection (A2) positionnée entre lesdits bords opposés, soufflant ainsi le gaz vers une pluralité de régions d'éjection (A) discontinues dans la direction de la largeur de ladite membrane électrolytique (92) et incluant au moins lesdits bords opposés de ladite membrane électrolytique (92) vus dans la direction de la largeur de la membrane électrolytique (92) dans ladite étape c).

10. Procédé selon la revendication 9, dans lequel
un angle de rotation (0) de ladite membrane électrolytique entre les étapes c) et d) n'est pas supérieur à 90 degrés.

11. Procédé selon l'une quelconque des revendications 9 et 10, dans lequel
une relation entre la tension de ladite bande allongée (90) introduite dans ledit espace (15) et la tension dudit matériau de base (91) après la séparation est régulée dans ladite étape b) en régulant le nombre de rotations d'un rouleau de déroulement de membrane (121) destiné à dérouler ladite bande allongée (90) de telle sorte que la tension de ladite bande allongée (90) soit égale à une première valeur de réglage prédéfinie, et le nombre de rotations d'un rouleau d'enroulement de matériau de base (131) destiné à enrouler ledit matériau de base de telle sorte que la tension dudit matériau de base (91) soit égale à une deuxième valeur de réglage prédéfinie.

12. Procédé selon la revendication 11, dans lequel
la tension dudit matériau de base (91) après la séparation est rendue inférieure à la tension de ladite bande allongée (90) introduite dans ledit espace (15) à l'étape b) par
le fait que ladite deuxième valeur de réglage est inférieure à ladite première valeur de réglage.

13. Procédé selon l'une quelconque des revendications 9 et 12, dans lequel
une relation entre la vitesse de rotation dudit rouleau d'aspiration (20) et la vitesse de rotation dudit rouleau de séparation (11) est régulée dans ladite étape b) en appliquant une charge à la rotation dudit rouleau de séparation (11).

14. Procédé selon la revendication 13, dans lequel
la vitesse de déplacement de la surface périphérique extérieure dudit rouleau de séparation (11) dans ledit espace (15) est rendue inférieure à la vitesse de déplacement de la surface périphérique extérieure dudit rouleau d'aspiration (20) dans ledit espace dans ladite étape b) en fournissant la charge à la rotation dudit rouleau de séparation (11).

15. Procédé selon la revendication 14, dans lequel
ledit rouleau de séparation (11) tourne de manière coulissante par rapport audit matériau de base (91) et est mobile par rapport audit matériau de base (91) dans ladite étape b).
